# EUROPÄISCHE PATENTSCHRIFT

(11) **EP 2 496 371 B1**
(45) Veröffentlichungstag und Bekanntmachung des Hinweises auf die Patenterteilung: **12.03.2014**
(21) Anmeldenummer: 10760952.1
(22) Anmeldetag: 14.09.2010
(51) Int. Cl.: B21D 22/20, B21D 37/16, B21D 53/88, B32B 15/01, C21D 1/673, C21D 9/48

(54) **VERFAHREN ZUM HERSTELLEN VON BAUTEILEN MIT BEREICHEN UNTERSCHIEDLICHER DUKTILITÄT**
PROCESS FOR PRODUCING COMPONENTS HAVING REGIONS OF DIFFERING DUCTILITY
PROCÉDÉ DE FABRICATION D'ÉLÉMENTS AVEC DES ZONES DE DUCTILITÉ DIFFÉRENTE

(30) Priorität: 06.11.2009 DE 102009052210
(43) Veröffentlichungstag der Anmeldung: 12.09.2012
(73) Patentinhaber: voestalpine Metal Forming GmbH, 3500 Krems an der Donau (AT)
(72) Erfinder: SOMMER, Andreas, 74564 Crailsheim (DE); HARTMANN, Dieter, 73557 Mutlangen (DE); WIEMANN, Marcus, 49324 Melle (DE)
(74) Vertreter: Naefe, Jan Robert
(86) Internationale Anmeldenummer: PCT/EP2010/063450
(87) Internationale Veröffentlichungsnummer: WO 2011/054575

(56) Entgegenhaltungen:
- WO-A1-2005/021177
- WO-A1-2008/024042
- WO-A1-2009/033527
- DE-A1- 10 049 660
- DE-A1- 10 136 433
- DE-B3-102005 025 026
- DE-C1- 10 135 647
- FR-A1- 2 921 889

## Beschreibung

Die Erfindung betrifft ein Verfahren zur Herstellung von Bauteilen aus Stahlblech.

In der Dicke und Materialgüte variierende Blechprodukte, vorzugsweise aus Stahlblech, kommen verstärkt im Kraftfahrzeugbau zur Anwendung. Hierdurch kann das Gewicht von Karosseriebauteilen in Anpassung an deren Funktion reduziert werden. Derartige Karosseriebauteile sind beispielsweise A-, B- und C-Säulen, Stossfänger bzw. deren Querträger, Dachrahmen, Seitenaufprallträger, Außenhautteile usw.

In diesem Zusammenhang ist es Stand der Technik, sogenannte Tailored Blanks einzusetzen. Hierbei handelt es sich um Platinen, die aus mehreren Blechteilen mit gleicher oder unterschiedlicher Blechdicke und Materialgüten zusammengeschweißt sind. Auch die Verwendung von sogenannten Patchwork Blanks ist bekannt. Dies sind parallel aufeinander gesetzte Bleche variierender Dicke und Materialgüte.

Bei letzterem Verfahren werden die Bleche aufeinandergelegt und anschließend miteinander gefügt, insbesondere durch Punktschweißen.

Patchwork Blanks haben den Nachteil, dass die Punktschweißverbindungen bei der Umformung hohen Belastungen unterworfen sind und gegebenenfalls auch reißen können. Zudem kann der zwischen den Blechlagen bestehende Spalt zu Korrosionsproblemen führen, zu deren Beherrschung eine aufwändige Abdichtung notwendig ist. Weiterhin ist der Übergang zwischen den einzelnen Dickenbereichen sowohl bei Tailored Blanks als auch bei Patchwork Blanks relativ schroff. Dadurch können im unmittelbaren Übergangsbereich unerwünschte Spannungsspitzen auftreten.

Obwohl mit den Tailored und Patchwork Blanks eine deutliche Gewichtsreduzierung erreicht wird, ist der Korrosionsschutz relativ aufwändig.

Aus der DE 100 11 589 A1 ist ein Verfahren zur Herstellung von bereichweise mehrlagigen Blechplatinen bekannt bei dem eine kleinere Platine unter Einbringung einer Klebstoffzwischenschicht mit einer größeren Platine zusammengefügt wird. Vor dem Zusammenfügen der Platinen wird die Klebstoffzwischenschicht auf die kleinere Platine in einem Pulverbeschichtungsverfahren aufgebracht. Bevorzugt wird die kleinere Platine vollflächig mit einem die Klebstoffzwischenschicht bildenden Pulverharz beschichtet, wonach die auf Maß zusammen geschnittenen Platinen unter Temperatur zu einem Verbund gepresst und vor einem gemeinsamen Tiefziehen abgekühlt werden.

Aus der DE 10 2004 031 797 A1 ist ein Verfahren zum Herstellen eines umgeformten, lokal verstärkten Blechbauteil zum entsprechenden Blechbauteil bekannt, wobei das Verfahren vorsieht, vor oder während eines Umformprozesses ein Verstärkungsblech an einem Basisblech mittels einer Lötverbindung zu befestigen, wobei zur Herstellung der Lötverbindung ein Nickelbasislotwerkstoff verwendet wird.

Aus der DE 100 49 660 A1 ist ein Verfahren zum Herstellen lokal verstärkter Blechumformteile bekannt, bei dem das Basisblech des Strukturteils im Flachzustand mit der Verstärkungsblechlage definiert verbunden und dieses gepatchte Verbundblech anschließend gemeinsam umgeformt wird. Um das Herstellungsverfahren hinsichtlich Verfahrenserzeugnis und Ergebnis zu verbessern sowie bezüglich der verfahrensausübenden Mittel zu entlasten wird das Verbundblech vor dem Umformen auf mindestens 800 bis 850°C erwärmt, rasch eingelegt und im Warmzustand zügig umgeformt und anschließend bei mechanischer Fixierung des Umformzustandes durch Kontaktierung mit dem vom innen her zwangsgekühlten Umformwerkzeug definiert abgekühlt. Insbesondere der insoweit maßgebende Temperaturbereich von 800 bis 500°C soll mit einer definierten Temperaturrampe durchfahren werden, wobei der Schritt des Verbindens von Verstärkungsblech und Basisblech in den Umformprozess integriert werden kann indem die Teile miteinander hartverlötet werden, wodurch ein wirksamer Korrosionsschutz an der Kontaktzone erreicht werden soll. Das Blech kann insbesondere ein härtbares Blech aus einem Stahl, der allgemeinen Formel 22 MnB5 bestehen, welcher insbesondere mit Aluminium beschichtet ist. Hierbei sollen Festigkeiten von 1300 bis 1600 MPa möglich sein.

Aus der DE 42 31 213 A1 ist ein Verfahren zum Herstellen eines durch Pressen oder Tiefziehen gefertigten Formkörpers bekannt, wobei dieser Formkörper, z. B. ein Träger mit einem hinsichtlich seiner Wandstärken dickeren mittleren Bereich und mit reduzierten Wandstärken versehenen Bereichen ausgebildet wird und hierbei aus einem einstückigen Blechteil hergestellt wird, welches eine der größten Wandstärke des zu fertigenden Formkörpers entsprechende Dicke aufweist und vor dem Pressen oder Tiefziehen ausschließlich in denjenigen Bereichen in denen der Formkörper eine geringere Wandstärke aufweisen soll durch Auswalzen oder entsprechend andere Streckverfahren auf die gewünschte, geringere Dicke reduziert wird.

Aus der DE 10 2004 054 795 A1 ist ein Verfahren zum Herstellen von Blechbauteilen sowie Karosseriebauteilen bekannt, bei denen mindestens ein Blech auf Basis eines bohrlegierten Vergütungs- oder Einsatzstahles mit mindestens einem Blech etwa gleicher Werkstoffgüte oder aus einem anderen Stahlwerkstoff verbunden und der Materialverbund mindestens einem Umformvorgang unterworfen wird, wobei zumindest das bohrlegierte Blech warm umgeformt und bei geschlossenen Formwerkzeughälften einer in situ-Presshärtung unterzogen wird.

Aus der DE 10 2004 038 626 B3 ist ein Verfahren zum Herstellen von gehärteten Bauteilen aus Stahlblech bekannt, bei dem ein bereits auf Endkontur und Endlochbild geschnittenes Bauteil erhitzt und anschließend in ein Werkzeug eingelegt wird, indem nur die Außenkanten geklemmt werden während das gesamte Bauteil in der Form abgekühlt wird und sich in der Form durch das Abkühlen an die Form anlegt. Hierbei wird das Bauteil, welches aus einem härtbaren Stahl besteht gehärtet.

Aus der WO 2008/024042 A1 ist ein Verfahren zum Warmumformen und Härten eines Bauteils bekannt, bei dem zwei Teilplatinen einander überlappend angeordnet und durch Schweißen miteinander verbunden werden. Die zwei Teilplatinen bestehen dabei aus zwei Stahlsorten mit unterschiedlichem Härteverhalten. Anschließend wird das gesamte Bauteil vollständig in einem Ofen auf Austenitisierungstemperatur gebracht und anschließend pressgehärtet. Durch die verschiedenen Härteverhalten der zwei Teilplatinen ergeben sich am fertigen Bauteil Teilbereiche mit unterschiedlichen Härtegraden.

Aufgabe der Erfindung ist es, ein Verfahren zur Herstellung von Bauteilen aus Stahlblech mit unterschiedlicher Duktilität zu schaffen, wobei das Bauteil einen guten Korrosionsschutz besitzt.

Die Aufgabe wird mit den Merkmalen des Anspruch 1 gelöst.

Vorteilhafte Weiterbildungen sind in Unteransprüchen gekennzeichnet.

Erfindungsgemäß wird ein sogenanntes gepatchtes Blechbauteil erzeugt, wobei dieses gepatchte Blechbauteil entweder dadurch hergestellt wird, dass zumindest zwei Bleche aufeinandergesetzt und gefügt werden, anschließend fertig geformt werden und anschließend einem Austenitisierungsschritt unterzogen werden, an den sich eine Abschreckhärtung anschließt (indirektes Verfahren) oder die zumindest zwei Bleche miteinander verbunden werden und anschließend aufgeheizt und gemeinsam umgeformt werden.

Erfindungsgemäß handelt es sich bei den Blechen um verzinkte Stahlbleche die auch nach dem Aufheizen und Abkühlen einen guten kathodischen Korrosionsschutz ergeben, der auch ohne weitere Nachbehandlung aufrechterhalten bleibt.

Selbstverständlich sind auch andere metallische Beschichtungen wie Zinklegierungen, Aluminium, Aluminiumlegierungen sowie Nickel und Nickellegierungen als Beschichtung geeignet und hiermit als gleichwertig offenbart.

Erfindungsgemäß können dabei die Bauteileigenschaften auf die verschiedensten Weisen eingestellt werden.
1. Austenitisierungszeit soweit reduziert, dass sich im gepatchten Bereich niedrigere Festigkeiten einstellen, sowie ein ausreichender kathodischer Korrosionschutz sich ergibt, und in den übrigen Bereichen eine vollständige Austenitisierung vorliegt.
2. Austenitisierungszeit ausreichend für komplette Durchhärtung einer Platine mit verzinktem Ausgangswerkstoff 22MnB5 in Verbindung mit einer Platine Bauteil B aus einem jeweils verzinkten weichen Tiefziehstahl, einem mikrolegierten Stahl , einem Kohle-Mangan-Stahl oder einem Dualphasenstahl wobei sich beim Presshärten ein ausreichender kathodischer Korrosionsschutz einstellt
3. Trennung der Patche nach dem Kaltumformen oder nach dem Presshärten.
4. Austenitisierungszeit ausreichend für kompl. Durchhärtung von Platine A und B wobei ein ausreichender kathodischer Korrosionsschutz sich einstellt
5. Umformen der gepatchten Platine in einem Warmumformwerkzeug mit Austenitisierungsvarianten sowie Materialpaarungen wie unter Punkt 1., Punkt 3. und Punkt 4. beschrieben, wobei ein ausreichender kathodischer Korrosionsschutz sich einstellt, mit nach dem Warmumformen zu erfolgenden Laserbeschnitt oder Hart-Beschneiden mittels Werkzeugen

Die Erfindung wird anhand einer Zeichnung beispielhaft erläutert. Es zeigen dabei:
- Fig. 1:: die zusammengefügten Ausgangsplatinen A und B vor dem Kaltumformen und Kaltbeschneiden,
- Fig. 2:: das Bauteil, bestehend aus Platine A und B, das in Werkzeugen kaltumgeformt und fertigbeschnitten wurde,
- Fig. 3:: das Bauteil auf einer Lochstation, in der die Schweißpunkte ausgestanzt und somit Bauteil A von Bauteil B vor oder nach dem Presshärten voneinander getrennt werden.

Die Erfindung bietet mehrere Prozeßoptionen.

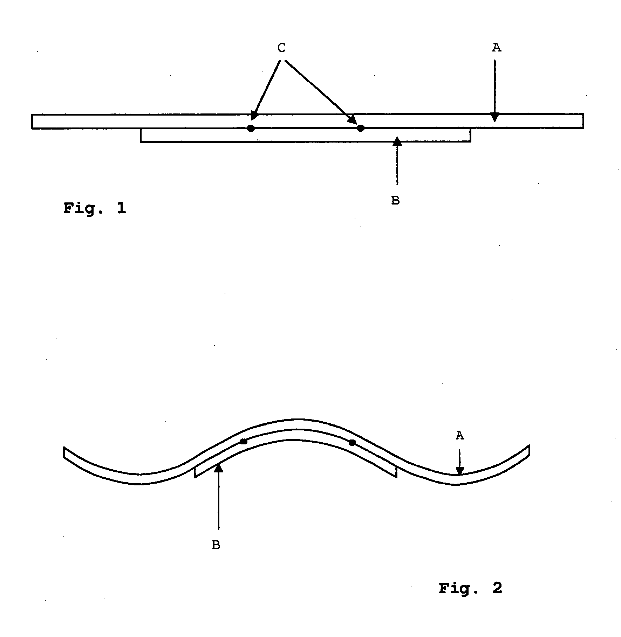

Bei Prozessoption 1 wird das kalt gefertigte Bauteil (Fig.2) bestehend aus den zusammengefügten Einzelplatinen A und B im Ofen so lange auf ca. 900°C erwärmt, bis die größere Platine A in den Bereichen, in denen sie nicht an der kleineren Platine B anliegt, die Austenitisierungstemperatur erreicht hat.

In den Bereichen, in denen Platinen A und B zusammengefügt sind, hat das Bauteil eine größere zu erwärmende Masse.

Dies ermöglicht, dass das Bauteil, bei gleicher Ofendurchlaufzeit, im Bereich B keine Austenitisierungstemperatur erreicht, im Bereich A jedoch aufgrund der einfachen Blechstärke und somit geringeren Masse auf Austenitierungstemperatur erwärmt wird.

Das Bauteil wird im Anschluss in einem Presshärtewerkzeug abgekühlt bzw. Pressgehärtet.

Nach dem Presshärten weist das Bauteil im Bereich B aufgrund der im Ofen nicht erreichten Austenitisierungstemperatur ein duktileres Materialgefüge aus.

Es können, je nach gewählter Ofendurchlaufzeit, für den gepatchten Bereich zwischen 500 und 1600 MPa Zugfestigkeit sowie im übrigen, nicht gepatchten Bereich zwischen 1300 und 1600 MPa Zugfestigkeit erreicht werden.

Die Übergänge von den nicht austenitisierten Bereichen zu den austenitisierten Bereichen liegen je nach angewendeter Platinen-Blechstärke zwischen 5 und 30 mm, wodurch vermieden wird, dass in diesen Bereichen Spannungsspitzen auftreten. Diese weichen Übergänge vermeiden unerwünschte Spannungsspitzen beim Fahrzeug-Crash .

### Option 2:

Bei Prozessoption 2 wird das kalt gefertigte Bauteil (Fig.2) bestehend aus den zusammengefügten Einzelplatinen A und B im Ofen so lange auf ca. 900° erwärmt, bis Platine A die Austenitisierungstemperatur erreicht hat. Das Grundmaterial bei Platine B kann in diesem Anwendungsfall jeweils aus einem weichen Tiefziehstahl, mikrolegiertem Stahl, Kohle-Mangan-Stahl oder einem Dualphasenstahl bestehen.

Das Bauteil wird im Anschluss in einem Presshärtewerkzeug abgekühlt / pressgehärtet.

Die Platine A ist somit nach dem Presshärten in allen Bereichen zu martensitischem Gefüge umgewandelt und gehärtet worden und weist in allen Bereichen eine Zugfestigkeit zwischen 1300 und 1600 MPa auf.

Bei Platine B werden je nach Auswahl des Grundmaterials bei einem weichen Tiefziehstahl zwischen 250 und 350 MPa , bei einem mikrolegiertem Stahl zwischen 450 und 700 MPa, bei einem Kohle-Mangan-Stahl zwischen 500 und 750 MPa oder einem Dualphasenstahl zwischen 700 und 1100 MPa erreicht.

Aufgrund der verzinkten Oberflächen bei Platine A und Platine B wird bei allen Anwendungsfällen der kathodische Korrosionsschutz erreicht.

Ebenso ergibt sich aufgrund der Materialeigenschaften von Platine B ein erweitertes Prozessfenster bezüglich Ofendurchlaufzeiten.

### Option 3:

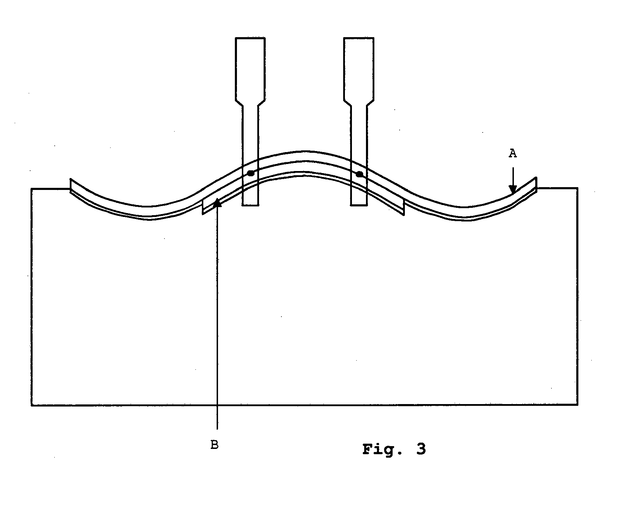

Bei Prozessoption 3 wird das in Fig. 2 gezeigte Bauteil, bestehend aus Platine A und B, das in Werkzeugen kaltumgeformt und fertigbeschnitten wurde, im direkten Anschluss noch getrennt. Fig.3

Dieses kann durch Ausstanzen der Schweißpunkte C in einem Lochwerkzeug oder auch Ausschneiden der Schweißpunkte C mittels Laserschneiden oder Bohren durchgeführt werden.
Im Anschluss daran können die nun voneinander getrennten Platinen A und B jeweils separat im Ofen auf die jeweilige Austenitisierungstemperatur erwärmt werden und im Anschluss in einem Presshärtewerkzeug abgekühlt (pressgehärtet) werden.

Es ist jedoch ebenso möglich, die Platinen A und B erst nach dem gemeinsamen Presshärten mittels Lasern, Hartlochen oder Bohren voneinander zu trennen und weiteren getrennten Prozessschritten bei der Anfertigung der Fahrzeug-Karosse zuzuführen.

### Option 4:

Bei Prozessoption 4 wird das kalt gefertigte Bauteil (Fig.2) bestehend aus den zusammengefügten Einzelplatinen A und B im Ofen so lange auf ca. 900°C erwärmt, bis die Platinen A und B die Austenitisierungstemperatur erreicht haben.

Das Bauteil wird im Anschluss in einem Presshärtewerkzeug abgekühlt / pressgehärtet.

Das zusammengefügte Bauteil ist somit nach dem Presshärten in allen Bereichen zu martensitischem Gefüge umgewandelt und gehärtet worden und weist in allen Bereichen eine Zugfestigkeit zwischen 1300 und 1600 MPa sowie einen guten kathodischen Korrosionsschutz auf.

### Option 5:

Umformen einer gepatchten Platine in einem Warmumformwerkzeug mit Austenitisierungsvarianten sowie Materialpaarungen wie unter Punkt 1., Punkt 2. und Punkt 4. beschriebenen.
Nach dem Warmumformen kann das Beschneiden des Bauteils zur Erreichung der gewünschten Endkontur mittels Laser, oder Hart-Beschneiden in Werkzeugen erfolgen.

Es wird bei Platine A und Platine B auch im gepatchten Bereich ein guter kathodischer Korrosionsschutz erreicht.

### Vorteile der Verfahren:

### Option 1 und Option 2:

- Für das Anfertigen von 2 Bauteilen ist im Kaltumformen und im Presshärten jeweils nur 1 Werkzeugsatz erforderlich (Kostenersparnis)
- Aufgrund der Zink-Beschichtung des Ausgangsmaterials stellt sich nach dem Erwärmen und Presshärten der Bauteile auch in den zusammengefügten Bereichen ein hervorragender kathodischer Korrosionsschutz ein, wodurch in diesen Bereichen keine zusätzlichen Abdichtungsmaßnahmen erforderlich sind
- Gewichtsersparnis, da nur in den zusammengefügten Bereichen eine erhöhte Blechstärke des Bauteiles notwendig ist
- Im gepatchten Bauteilbereich kann man aufgrund der nicht erreichten Austenitisierungstemperatur duktilere Materialeigenschaften erreichen
- Keine Spannungsspitzen im Übergangsbereich

Ein Anwendungsbeispiel für Option 1 und 2 wäre z. B. eine A-Säule, wobei im Bereich der Anbindung Türscharnier eine erhöhte Blechdicke, jedoch auch duktilere Materialeigenschaft von Vorteil sind.

### Option 3

- Für das Anfertigen von 2 Bauteilen ist im Kaltumformen nur 1 Werkzeugsatz notwendig (Kostenersparnis)

### Option 4:

- Für das Anfertigen von 2 Bauteilen ist im Kaltumformen und beim Presshärten jeweils nur 1 Werkzeugsatz erforderlich (Kostenersparnis)
- Aufgrund der Zink-Beschichtung des Ausgangsmaterials stellt sich nach dem Erwärmen und Presshärten der Bauteile auch in den zusammengefügten Bereichen ein hervorragender kathodischer Korrosionsschutz ein, wodurch in diesen Bereichen keine zusätzlichen Abdichtungsmaßnahmen erforderlich sind

- Nur In den zusammengefügten Bereichen erhöhte Blechstärke und somit bei minimaler Gewichtserhöhung eine bereichsweise Erhöhung der Belastbarkeit
- Keine Spannungsspitzen im Übergangsbereich

### Option 5:

- Aufgrund der Zink-Beschichtung des Ausgangsmaterials stellt sich nach dem Erwärmen und Warmumformen der Bauteile auch in den zusammengefügten Bereichen ein hervorragender kathodischer Korrosionsschutz ein, wodurch in diesen Bereichen keine zusätzlichen Abdichtungsmaßnahmen erforderlich sind
- Beim Presshärten der Bauteile nur ein Presshärtewerkzeug erforderlich
- Nur in den zusammengefügten Bereichen eine erhöhte Blechstärke und somit bei minimaler Gewichtserhöhung eine bereichsweise Erhöhung der Belastbarkeit
- Keine Spannungsspitzen im Übergangsbereich
- Erreichbare Materialeigenschaften wie unter Punkt 1. Punkt 2. und Punkt 4. beschrieben

### Bezugszeichenliste:

- A: Platine
- B: weiteres Blech/Platine
- C: Schweißpunkte

## Patentansprüche

1. Verfahren zum Herstellen von Bauteilen aus Stahlblech mit Bereichen unterschiedlicher Duktilität, wobei aus einer Blechplatine (A) aus einer härtbaren Stahllegierung entweder
ein Bauteil durch Tiefziehen erzeugt wird und das tiefgezogene Bauteil anschließend durch eine Wärmebehandlung zumindest teilaustenitisiert wird und anschließend in einem Werkzeug abschreckgehärtet wird, oder
die Platine (A) durch eine Wärmebehandlung zumindest teilaustenitisiert wird und in heißem Zustand umgeformt und dabei oder anschließend abschreckgehärtet wird, wobei die Blechplatine (A) eine kathodische Korrosionsschutzbeschichtung auf der Basis von Zink besitzt, **dadurch gekennzeichnet, dass** in Bereichen einer gewünschten höheren Duktilität des Bauteils zumindest ein weiteres Blech (B) auf der Platine (A) aufgebracht angeordnet ist, so dass die Platine (A) dort während der Wärmebehandlung in einem geringeren Maße aufgeheizt wird als im übrigen Bereich.

2. Verfahren nach Anspruch 1, **dadurch gekennzeichnet, dass** das zumindest eine weitere Blech (B) auf der Platine (A) durch Schweißen oder Nieten aufgebracht ist.

3. Verfahren nach Anspruch 1 oder 2, **dadurch gekennzeichnet, dass** das zumindest eine weitere Blech (B) nach dem Umformen und Härten entfernt wird.

4. Verfahren nach einem der vorhergehenden Ansprüche, **dadurch gekennzeichnet, dass** das zumindest eine weitere Blech (B) nach dem Umformen und Härten auf der Platine (A) als Materialverstärkung verbleibt.

5. Verfahren nach einem der vorhergehenden Ansprüche, **dadurch gekennzeichnet, dass** das zumindest eine weitere Blech (B) aus dem gleichen Stahlmaterial besteht wie die Platine (A).

6. Verfahren nach einem der Ansprüche 1 bis 5, **dadurch gekennzeichnet, dass** das zumindest eine weitere Blech (B) aus einem nicht härtbaren Stahlmaterial, einem weichen Tiefziehstahl, einem mikrolegierten Stahl, einem Kohlemanganstahl oder einem Dualphasenstahl besteht.

## Claims

1. Method for producing components from sheet steel having regions of varying ductility, wherein, from a blank (A) of a hardenable steel alloy, either
a component is produced by deep-drawing and the deep-drawn component is then at least partially austenised by means of a heat treatment, followed by quench hardening in a tool, or
the blank (A) is at least partially austenised by means of a heat treatment and formed in the hot state while or before being quench hardened, the blank (A) having a cathodic corrosion protection coating based on zinc, **characterised in that** at least one further metal sheet (B) is applied to the blank in regions of a desired higher ductility of the component, so that the blank (A) is in these regions heated to a lesser degree during the heat treatment than in the remaining region.

2. Method according to claim 1, **characterised in that** the at least one further metal sheet (B) is applied to the blank by welding or riveting.

3. Method according to claim 1 or 2, **characterised in that** the at least one further metal sheet (B) is removed after the forming and hardening process.

4. Method according to any of the preceding claims, **characterised in that** the at least one further metal sheet (B) remains on the blank (A) after the forming and hardening process for material reinforcement.

5. Method according to any of the preceding claims, **characterised in that** the at least one further metal sheet (B) is made of the same steel material as the blank (A).

6. Method according to any of the preceding claims, **characterised in that** the at least one further metal sheet (B) is made of a non-hardenable steel material, a soft deep-drawn steel, a micro alloy steel, a carbon-manganese steel or a dual-phase steel.

## Revendications

1. Procédé pour fabriquer des composants en tôle d'acier avec des zones de ductilité différente, dans lequel, à partir d'une plaque de tôle (A) en alliage d'acier durcissable :
soit on produit un composant par emboutissage et le composant embouti est ensuite au moins partiellement austénitisé par un traitement à chaud et est ensuite durci par trempage dans un outil,
soit la plaque (A) est au moins partiellement austénitisée par un traitement à chaud et est déformée dans l'état chaud et à ce moment ou ensuite durcie par trempage,
dans lequel la plaque de tôle (A) possède un revêtement de protection anticorrosion cathodique à base de zinc, **caractérisé en ce que** dans les zones où l'on souhaite une ductilité plus élevée dans le composant, on agence au moins une autre tôle (B) appliquée sur la plaque (A), de sorte que la plaque (A) est chauffée dans une moindre mesure pendant le traitement à chaud que dans les zones restantes.

2. Procédé selon la revendication 1, **caractérisé en ce que** ladite au moins une autre tôle (B) est appliquée sur la plaque (A) par soudure ou par rivetage.

3. Procédé selon la revendication 1 ou 2, **caractérisé en ce que** ladite au moins une autre tôle (B) est enlevée après la déformation et le durcissement.

4. Procédé selon l'une des revendications précédentes, **caractérisé en ce que** ladite au moins une autre tôle (B) reste sur la plaque (A) à titre de renforcement du matériau après la déformation et le durcissement.

5. Procédé selon l'une des revendications précédentes, **caractérisé en ce que** ladite au moins une autre tôle (B) et du même matériau à base d'acier que la platine (A).

6. Procédé selon l'une des revendications 1 à 5, **caractérisé en ce que** ladite au moins une autre tôle (B) est en un matériau à base d'acier non durcissable, un acier d'emboutissage malléable, un acier micro-allié, un acier carbone/manganèse ou un acier à double phase.
